# EUROPEAN PATENT SPECIFICATION

(11) **EP 3 769 473 B1**
(45) Date of publication and mention of the grant of the patent: **22.12.2021**
(21) Application number: 19718925.1
(22) Date of filing: 18.03.2019
(51) Int. Cl.: H04L 12/28

(54) **MULTI USER DSL METHOD AND SYSTEM FOR THE STATISTICAL MULTIPLEXING OF COPPER LINES**
MEHRBENUTZER-DSL-VERFAHREN UND SYSTEM ZUM STATISTISCHEN MULTIPLEXEN VON KUPFERLEITUNGEN
PROCÉDÉ ET SYSTÈME DSL À UTILISATEURS MULTIPLES DESTINÉS AU MULTIPLEXAGE STATISTIQUE DE LIGNES DE CUIVRE

(30) Priority: 19.03.2018 IT 201800003706
(43) Date of publication of application: 27.01.2021
(73) Proprietor: Krupter SRL, 00198 Roma (RM) (IT)
(72) Inventor: VATALARO, Francesco, 00199 ROMA (RM) (IT); MAZZENGA, Franco, 00145 ROMA (RM) (IT); GIULIANO, Romeo, 00128 ROMA (RM) (IT)
(74) Representative: Mari, Marco Giovanni
(86) International application number: PCT/IT2019/050060
(87) International publication number: WO 2019/180756

(56) References cited:
- US-A1- 2010 310 255
- US-B1- 8 411 696

## Description

### Field of application

The invention relates to the technical field of data transmission on copper access networks.

More in detail, the invention relates to a multi user DSL (Digital Subscriber Line) method and a system for the statistical multiplexing of copper access lines. For simplicity, hereinafter this method will be indicated with the acronym MUSM-DSL (Multi User Statistical Multiplexing DSL).

### State of the art

With reference to the FttC (Fiber to the Cabinet) type of access network, to date improvements introduced to increase the capacity per user, above all for transmission on the downstream (DS) link, operate exclusively at physical layer (PHY) level and concern:
- broadening of the transmission bandwidth (e.g. from 17 MHz to 35 MHz);
- the use of processing techniques for the dynamic management of the transmission spectrum [J. Cioffi, M. Brady, V. Pourahmad, S. Jagannathan, W. Lee, Y. Kim, C. Chen, K. Seong, D. Yu, "Vectored DSLs with DSM: The road to Ubiquitous Gigabit DSLs", 2006];
- the use of techniques for cancelling interference between users, such as vectoring [Ginis, G.; Cioffi, J.M. "Vectored transmission for digital subscriber line systems", IEEE Journal Selected Areas on Communications, 2002, Vol. 5, pp. 1085-1104] and/or MIMO [A. H. Fazlollahi, X. E. Wang, Y. Zeng, "FEXT Exploitation in Next Generation DSL Systems", IEEE Global Communications Conference (GLOBECOM), Washington, DC, USA, Dec. 2016], which improve the transmission capacity of each line;
- the use of techniques for the physical aggregation of several copper pairs (copper pair bonding) to assign exclusively and statically to a user;
- the use of phantom techniques [J. Cioffi, M. Brady, V. Pourahmad, S. Jagannathan,W. Lee, Y. Kim, C. Chen, K. Seong, D. Yu, "Vectored DSLs with DSM: The road to Ubiquitous Gigabit DSLs", 2006], which starting from the physical aggregation of several copper pairs per single user enable the number of pairs to be increased electrically.

Although significant, the improvement in the performance per single user is obtained to the detriment of an excessive consumption of copper pairs available in the cable that reaches the end users.

Cioffi *et al.* [J. M. Cioffi, S. Jagannathan, M. Mohseni, and G. Ginis, "CuPON: The Copper Alternative to PON 100 Gb/S DSL Networks," IEEE Communications Magazine, vol. 45, -); no.6, pp. 132-139, Jun 2007] introduced the architecture called Cu-PON to exploit the extra capacity present in a cable due to unused copper pairs normally existing in the secondary network between the Cabinet (CAB) and the customer's premises. By statically bonding a certain number of copper pairs, for example four pairs (i.e., the customer's original line and three unused lines), it is possible to perform Vectoring between these groups of pairs, so as to obtain four times the original bit rate for the customer. In the Cu-PON configuration, the group of pairs simply substitutes the single copper line. Therefore, the higher speed achieved is solely due to the increase of the number of copper lines. A consequence of this is that it becomes necessary to substitute all the CPE (Customer Premises Equipment) transceiver devices.

Furthermore, the advantage obtained in terms of increase in transmission speed in the Cu-PON cannot always be guaranteed to all users, as it depends on the effective availability of extra copper lines in a local area.

US 8 411 696 B1 discloses a multi-user system for the statistical multiplexing of copper access lines, comprising:
- an electronic device, associated with a distributor of an access network node interposed between a central office and a transponder device of end users;
- a DSLAM apparatus, associated with said access network node.

### Presentation of the invention

The object of the invention is to propose a method, and a system that can implement this method, which allows the transmission capacity obtained considering sets of metal pairs between the customers of a fixed access network to be shared.

The object of the invention is achieved with a method for multi user statistical multiplexing of copper access lines according to the independent main claim 1.

An object of the invention is also a system for statistical multiplexing multi user of copper access lines according to the independent claim 8.

Further advantageous features of the method and of the system of the invention are described in the dependent claims.

The method of the invention implements the statistical multiplexing functions allowing the capacity of the lines connected to any intermediate point between the Cabinet (CAB) or the central office (CO) and the Customer Premises Equipment (CPE), hereinafter for simplicity indicated with the term distributor, to be shared.

The system of the invention provides for the implementation and use of at least one new device to be inserted in existing networks and also some changes to the functions of existing DSL Access Multiplexer (DSLAM) equipment. The aim of the new device is to implement statistical multiplexing functions on a set of N copper lines that are shared by a limited number of users.

The advantages of the invention are multiple.

The method of the invention allows sharing with multi user techniques, through statistical multiplexing, groups of access lines and is applied to any type of fixed access network in which, for the connects with the users, the use of copper pair cables from the CO (central office), or from the CAB (Cabinet), of from any intermediate Dp (Distribution Point). The network architectures that employ DSL technology and that fall within the field of application of the present invention include both those known as FttC (Fiber to the CAB) and those known as FttDp (Fiber to the Dp), which use fiber optic connects starting from the CO. The method of the invention is very flexible, as it is based on a concept of sharing that can be applied to the frequent case of VDSL (Very high bit rate DSL), but also extends to similar technologies, from conventional ADSL (Asymmetrical DSL) to the more modern G.fast (ITU-T G.9700, ITU-T G.9701) and also to other technologies that can be used in context of local networks (e.g. Gigabit Ethernet).

With the method of the invention it is possible to achieve a significant increase of the transmission capacity per single user that, without loss of generality, hereinafter is assumed as connected to the CO, to the CAB or to the Dp (or to another network node) through at least one copper pair assigned exclusively thereto.

The multiplexing method of the invention can be implemented in various ways, in the presence of one or more operators that serve a plurality of customers all connected to the CO on the same copper pair cable.

### Brief description of the drawings

Further features and advantages of the method and of the system of the invention will be more apparent from the detailed description set forth below, with the aid of the drawings that show preferred embodiments thereof, illustrated by way of non-limiting example, wherein:
- Fig. 1 shows the positioning of the active device at the distributor, comprised in the system of the invention, in the fixed network access architecture of FttC, FttDp type and with DSL connect directly from the CO;
- Figs. 2a-2b show the conceptual diagram of the switching and retransmission operations performed by the active device positioned at the distributor, comprised in the system of the invention;
- Fig. 3a shows the functional architecture of the active device at the distributor, comprised in the system of the invention;
- Fig. 3b shows the functional architecture of a possible variant of embodiment of the active device at the distributor, comprised in the system of the invention;
- the Fig. 4 shows the functional architecture of the modified DSLAM, comprised in the system of the invention.

### Detailed description of a preferred embodiment of the invention

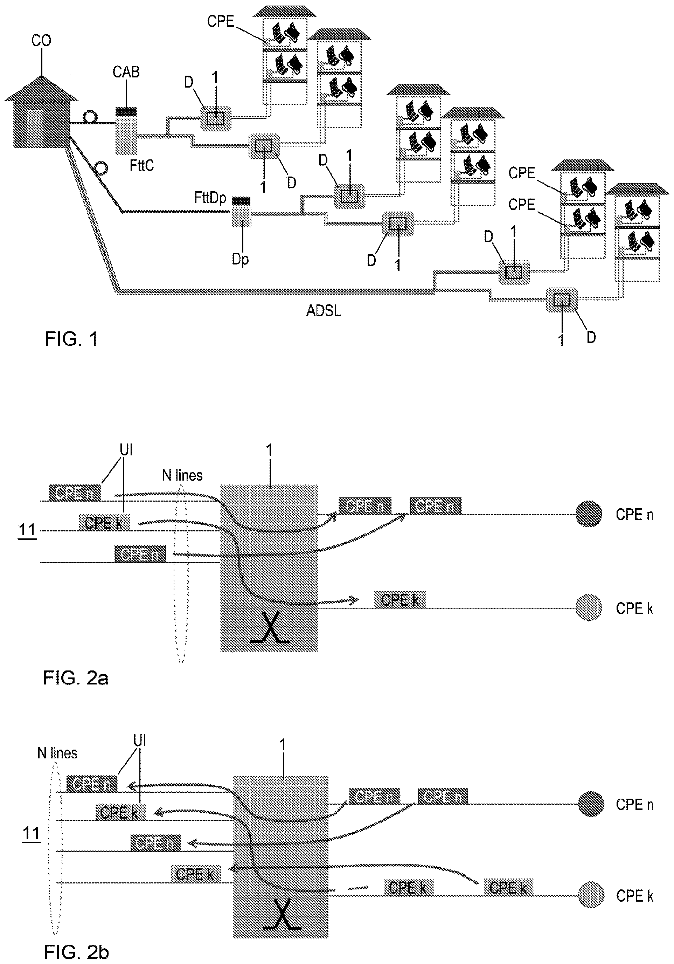

It is important to firstly point out that, in typical fixed network architectures, it is always possible to identify a point in which a subset of N copper pairs is extracted from the cable coming from the Central Office CO or from the Cabinet CAB or from the Distribution Point Dp (or other network node) for subsequent connecting to the respective users. By way of example, in networks with FttC architecture this extraction point is called distributor D and usually consists of a patch panel in which the pairs extracted from the cable coming from the Cabinet CAB are physically connected. Similar considerations are valid in the case of other network architectures (e.g. FttDp), as shown in Fig. 1.

Existing network architectures also deploy optical fiber from the central office CO to the intermediate distribution point. In general the closest point to the central office is the Cabinet from which the copper cables (FttC architecture) branch, while a further deployment point of the fiber closest to the dwellings is the Distribution Point Dp (FttDp architecture). In the oldest types the fiber might even be completely absent. In this case the copper cable branches directly from the central office to the user's house (ADSL architecture, as it is the only technology that can be implemented in this architecture). The active device 1, comprised in the system of the invention, can be deployed in any point on the copper cable between the termination of the fiber and the user's house.

Fig. 2a shows the case of transmission on the DS (downstream) link in which the UI (Units of Information) are transmitted by the DSLAM and received at the distributor D on any one of the N lines. The active device 1 at the distributor switches the UIs and retransmits them on the direct line connected to the CPE devices.

Fig. 2b shows the case of transmission on the US (upstream) link in which the UI transmitted by the CPE devices is received by the active device 1 at the distributor D and retransmitted on any one of the N lines exiting from the distributor D toward the DSLAM.

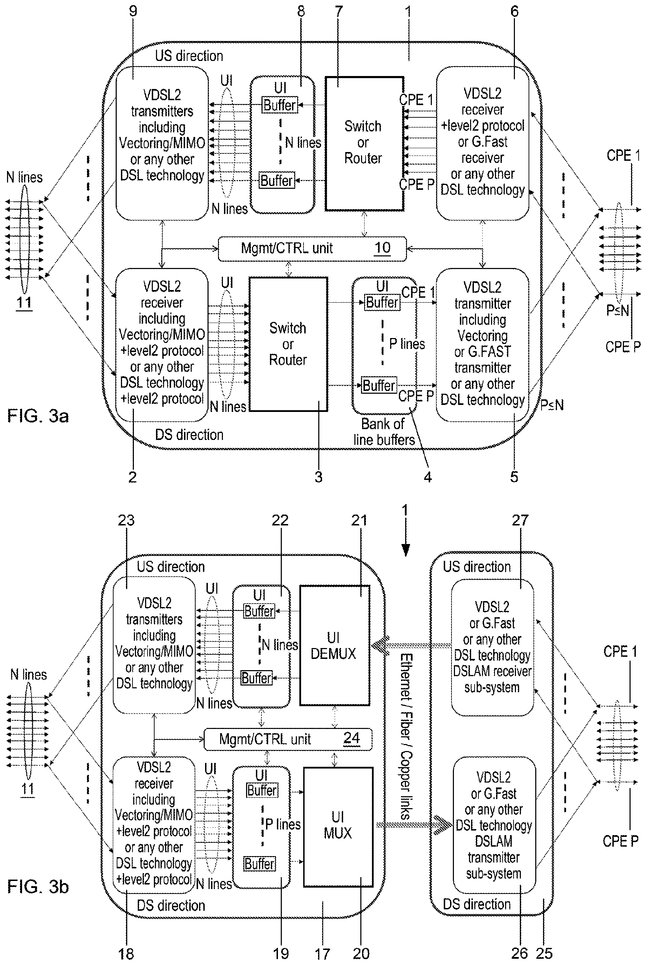

With reference to the details of Fig. 3a, said active device 1 at the distributor D comprises:
for the DS direction:
   - a receiving subsystem 2 from the DSLAM 11;
   - a switching subsystem 3;
   - a buffering subsystem 4 for transmission toward the CPE devices;
   - a transmission subsystem 5 toward the CPE devices;
for the US direction:
   - a receiving subsystem 6 from the CPE devices;
   - a switching subsystem 7;
   - a buffering subsystem 8 for transmission on the groups of lines toward the DSLAM 11;
   - a transmission subsystem 9 toward the DSLAM 11;
and further:
   - a control and management subsystem 10, for setting the parameters in the single subsystems of the two DS and US directions and for processing and collecting measurement data.

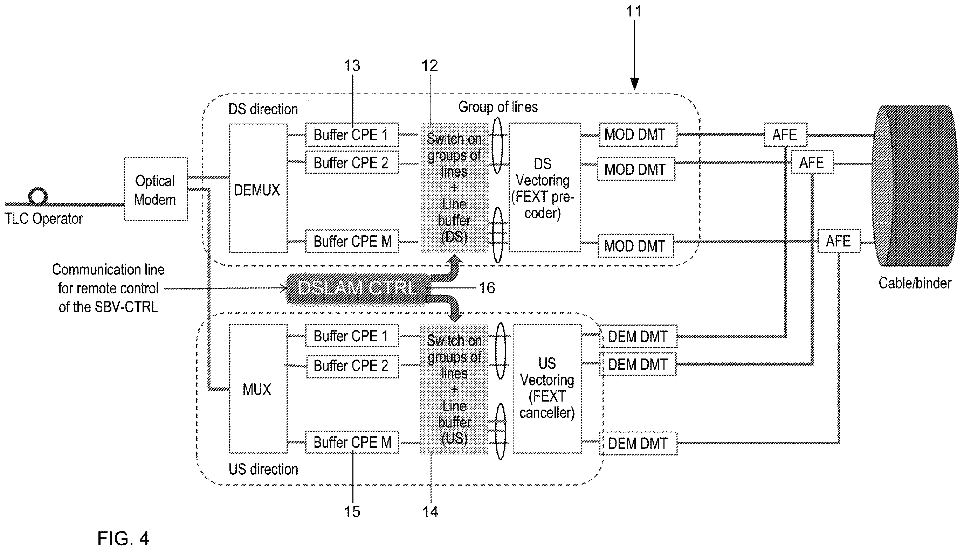

With reference to the details of Fig. 4, the modified DSLAM 11 comprises:
- a switch 12 on groups of lines, provided with buffering subsystems 13, able to route the UIs received by the central office CO toward the active device 1 at the distributor D;
- a switch 14 on groups of lines, optionally provided with buffering subsystems 15, able to route the UIs received by the active device 1 at the distributor D in the related buffers for subsequent transmission toward the central office CO;
- a control and management subsystem 16 of the DSLAM 11, which performs the functions to implement statistical multiplexing of the copper access lines.

### Sharing method of the N lines at the distributor D in the case of transmission on the DS direction

It is presumed that N lines extracted from the cable coming from the DSLAM 11 present at the central office CO or at the Cabinet CAB are connected at the distributor D. In the case of DS communication, it is assumed that the generic unit of information UI sent by the DSLAM 11 at the single CPE device of the user can be transmitted by it on any one of the N lines connected at the distributor D to which the destination CPE device is connected. Following the reception of a UI at the installed device 1 at the distributor D the content of an indicator ID inside the UI that uniquely identifies the destination CPE device is read. This ID may have been inserted in the UI by the DSLAM 11 or by a device farther upstream, depending on the transmission protocol used. An example of considerable interest is that in which communication between the CO and the DSLAM 11 at the Cabinet is based on Ethernet protocol. In this case the UI is actually the Ethernet frame and the ID is the MAC address of the destination CPE device. If it is not possible to identify an ID inside the UI, the DSLAM 11 will add this ID to the UI before its transmission on any one of the N lines. In the most general case, the DSLAM 11 can encapsulate the UI inside a frame used to transport the UI along the single copper line. In this case the information required for encapsulation is removed at the distributor D and the ID is read for the second routing toward the destination CPE device. In particular, it is assumed that after reading the ID the UI is first stored in the device 1 inside the distributor D and subsequently retransmitted, in the absence of pair bonding, on the copper line that connects the distributor D to the destination CPE device.

### Equipment for implementing the line-sharing method on the DS direction

Transmission on the DS direction, as described above, can be implemented by installing in each distributor D an active device 1 that, from an input-output point of view, implements in the DS direction a line-sharing method that, after receiving a UI on any one of the N copper lines connected to the distributor D and transmitted by the DSLAM 11, is able to send this UI on the output line to which the destination CPE device is connected, using the corresponding transmission technology, as shown in Fig. 2a.

### Sharing method of the N lines at the distributor D in the case of transmission on the US direction

The user CPE device transmits to the device 1 installed in the distributor D through the assigned copper line. For transmission the CPE device uses the established DSL technology. The UI transmitted toward the device 1 at the distributor D contains an ID that identifies the CPE device of origin. In the case in which the communication protocol is of Ethernet type, the MAC address of the source can be used as ID of the CPE device. The UI is then received by the device 1 in the distributor D, optionally stored and subsequently retransmitted to the DSLAM 11 using any one of the N lines connected to the distributor D.

### Equipment for implementation of the line-sharing method on the US direction

Transmission on the US direction, as described above, can be implemented by installing in the distributor D an active device 1 that, from an input-output point of view, implements a line sharing method in the US direction that, starting from the UI generated by a CPE device, allows transfer of the UI toward the DSLAM 11 using any one of the N copper lines connected to the distributor D, as shown in Fig. 2b.

A possible functional diagram of the device 1, inside the distributor D, which implements the line-sharing method, as described above, both for the DS direction and for the US direction is shown in Fig. 3a, together with the subsystems of which it is composed.

The transceiver equipment used for communications on the two DSLAM-distributor and distributor-CPE device links can be produced both using existing technologies and future technologies.

By way of non-limiting example, in a practical application in a FttC network, based on the profile 35b of the VDSL2 between the DSLAM 11 and the distributor D, G.fast could be used for communications between the distributor D and the CPE devices of the users connected thereto.

In this way, through G.fast, the single user is able to access a larger amount of bandwidth, obtained as a result of the sharing of the N pairs at the distributor D, especially when the number of simultaneously active users at the distributor D is low and hence the shared resource is substantial.

### Detailed description of a variant of embodiment of the invention

With reference to the details of Fig. 3b, the active device 1 at the distributor D consists of the interconnection of two distinct devices 17, 25.

The first device 17 of said two devices comprises:
for the DS direction:
   - a receiving subsystem 18 from the DSLAM 11;
   - a buffering subsystem 19 for transmission toward the CPE devices;
   - a multiplexing subsystem 20 of the UIs that generates the single signal transmitted on the fiber or copper link that is connected to the input of the second device 25;
for the US direction:
   - a demultiplexing subsystem 21 of the UIs from the signal present on the fiber or copper link exiting from the second device 25;
   - a buffering subsystem 22 for transmission on the groups of lines toward the DSLAM 11;
   - a transmission subsystem 23 toward the DSLAM 11;
and further:
   - a control and management subsystem 24, for setting the parameters in the single subsystems of the two DS and US directions and for processing and collecting measurement data,

The second device 25 of said two devices comprises:
for the DS direction:
   - a transmission subsystem 26 that performs reception of the multiplexed flow of UI from the first device 17 using the fiber or copper interconnection connect and that performs the typical functions of a DSLAM for transmission of the UI extracted from the multiplexed flow toward the corresponding destination CPE devices, and for the US direction:
   - a receiving subsystem 27 that performs transmission of the multiplexed flow of UIs received from the CPE devices toward the first device 17 using the fiber or copper interconnection connect and that performs the typical functions of a DSLAM to receive UIs from the CPE devices interconnected thereto.

### Modifications to be made in the DSLAMs

In order to exploit the functions offered by the new active device 1 at the distributor D it is necessary to make some changes in the operation of existing DSLAMs that allow each CPE device to be associated with the distributor D on which it is connected. Furthermore, the DSLAM must implement all the control/management functions of the single CPE devices to be performed through the intermediation of the active device at the distributor. Moreover, the DSLAM must be able to perform switching functions of the UIs received by the device at the CO (DS direction) on groups of lines.

Finally, the DSLAM could implement system level vectoring (SLV) and/or MIMO algorithms on all the pairs of the cable exiting from the Cabinet in order to significantly improve the transmission capacity on each of the single lines connected to the distributor.

The new functions of the DSLAM 11 can be implemented via software, for example by modifying the firmware of DSLAMs already available on the market, or by installing a processor/device 16 inside the DSLAM 11, as shown in Fig. 4. This processor/device 16 also enables remote control and management of the DSLAM 11 and, if necessary, configuration of the switches 12, 14 operating on the groups of lines for communications on the DS and US directions toward the distributors D. The switching function on the groups of lines of the UIs directed at the CPE devices is performed by the corresponding device 1.

### MUSM-DSL method in the multi-operator case

The method of the invention is applied to the case of an access network managed by a single operator. Extension to the case of shared use (multi-operator) must be carried out taking into consideration the different situations that could be established by the regulatory framework.

The proposed access network architecture, which includes a modified DSLAM 11 and a plurality of distributors D equipped with active device 1, can be used by several operators according to known methods, including bitstream and VULA (Virtual Unbundling of the Local Access). In this case, the UIs reach the DSLAM 11, which routes them to the corresponding CPE devices connected on a distributor D regardless of whether they belong to one operator or another.

Instead, if the operators wish to manage their own spectral resource on the single copper lines, the use of sub-band vectoring (SBV) technique with separated or superimposed bands [PCT/IT2016/000232, Krupter srl] enables the problem of sharing of the access infrastructure to be solved. In this case the single operator can transmit/receive the UIs of its users using all the pairs available at each distributor D but on each copper pair the signal transmitted occupies the portion of band assigned to the operator according to the SBV method. With regard to the case of multi-operator, at least two options for application of SBV can be distinguished:
- SBV is applied on the DSLAM-distributor connect and SBV is not applied to the distributor-CPE device connect, this strategy enables the operator to control its physical resource up to the distributor;
- SBV is applied from the DSLAM 11 to the D and on the connect that goes from the distributor D to the user, this strategy enables the operator to control its physical resource (frequency) from the DSLAM 11 to the CPE device.

It is also possible to allow use of the access infrastructure according to a time sharing method between operators, although this could require a review of the technologies to be used in practice, i.e. a practical solution might not be based on components available on the market.

The problem of sharing the infrastructure becomes more specific when the operator is allowed to make use of the physical pair from the DSLAM 11 to the CPE device and this pair is not shared with the other operators. In this case, the single group of N lines connected to the single distributor D could be divided into sub-sets and the lines of each sub-set can be connected to the active device 1, which is however managed by the single operator and uses a smaller number of N of copper lines. In this case the active device 1 at the distributor performs sharing of only the lines assigned to the operator for the CPE devices served thereby.

Finally, it is necessary to further distinguish between the possibility that the modified DSLAM 11 is unique and shared between several operators or the case in which each operator has its own DSLAM. In the case of one DSLAM 11 shared between operators, this must be capable of routing the UIs on the basis of the ID of the CPE devices and on its belonging to the operator transmitting the single UI on the line in the sub-set of lines assigned to the operator inside the single group/sub-set. Through sharing of the DSLAM 11 it is possible to apply Vectoring/MIMO on all the lines of the copper cable exiting from the Cabinet CAB in order to improve performance. In the case in which each operator is instead provided with its own DSLAM 11, optionally modified, each of them manages and coordinates with the active devices 1 inside its distributors D. In this case, in order to apply Vectoring on all the lines of the copper cable from the Cabinet CAB it is necessary to coordinate the various DSLAMs 11, i.e., to apply division techniques of the transmission resource (for example according to the SBV method) which aims at reducing or completely eliminating coordination of the different DSLAMs.

### Operation of the invention

The operation of the method of the invention can be described referring, for simplicity, to the case of a single operator. The considerations below immediately extend to the multi-operator case, and to other types of access networks and/or to other access technologies. The description below applies both to the case in which the DSLAM 11 does not use Vectoring on the copper cable exiting from the Cabinet CAB, and the case in which Vectoring can be applied on groups of lines or on all the lines present in the copper cable exiting from the Cabinet (system level vectoring), and also in the case in which MIMO is applied on groups of lines and in the case in which the groups of lines coincide with those connected to each distributor.

At the time of switch-on, or at periodic intervals, or following a reset operation, the DSLAM 11 modified as in Fig. 4 and operating on the basis of the MUSM-DSL method interrogates the active devices 1 at the distributors D to associate/verify the state of the copper lines connected thereto and acquire/update the identities of the CPE devices connected to the respective distributors D. Starting from this information the DSLAM 11 logically partitions the set of the copper cable lines from the Cabinet into one or more groups of lines connected to the single distributors D. The single group of lines is logically shared by all the CPE devices connected to the distributor D to transport the UIs from the DSLAM 11 toward the CPE devices and vice versa according to the method described above.

### DS direction

For transmissions on the DS direction, the DSLAM 11 receives the UIs directed at the CPE devices through the fiber connect coming from the CO. Starting from the ID of the destination CPE device, the DSLAM 11 identifies the distributor D and the corresponding group of N lines connected thereto. Subsequently, the DSLAM 11 selects any one of the N lines belonging to the group identified previously to transmit the UI toward the CPE device. Selection of the line within the group can be implemented according to any scheduling algorithm that, for example, takes account of the load condition of the lines within the group. The UI is demodulated and reconstructed by the active device 1 at the distributor D by means of the receiver 2 positioned at the output of the copper line selected by the DSLAM 11. On the basis of the ID contained in the UI, the switch 3 inside the device 1 at the distributor D sends the UI to the output buffer 4 associated uniquely with the line that connects the distributor D to the destination CPE device. The bits of the UI are extracted from the buffer 4 and transmitted toward the destination CPE device using the transmission subsystem 5 inside the active device 1 at the distributor D, which uses DSL technology (i.e., ADSL, VDSL, G.fast or the like) to be used specifically for communication with the destination CPE device, as shown in Fig. 3a.

### US direction

Transmission on the US direction is described referring to the single CPE device that emits a UI toward the receiving subsystem 6 positioned inside the active device 1 at the distributor D. The UI transmitted by the CPE device according to the specific DSL technology (i.e., ADSL, VDSL, G.fast or the like) is received and demodulated at the distributor D and subsequently sent to the switching subsystem 7 in the distributor D which routes it toward one of the output buffers 8 associated with the single line within the group of copper lines that connect the distributor D to the DSLAM 11. Selection of the buffer 8 can take place according to any scheduling algorithm that, for example, takes account of the instantaneous load of the single lines within the group. The UI is extracted from the output buffer 8 and transmitted toward the DSLAM 11 at the Cabinet CAB. The DSLAM 11 receives the UI and transmits it on the optical fiber connect toward the CO.

### Functions of the equipment that implement the method

Implementation of the MUSM-DSL method is based on the use of active devices 1 to be integrated in the current access networks. With reference to the case of FttC type networks but without being limited thereto, the functions implemented and performed inside the active device 1 at the distributor D and inside the DSLAM 11 at the Cabinet CAB are described below.

An example of functional architecture for the active device 1 at the distributor D is indicated in Fig. 3a.

The subsystems present in the active device 1 at the distributor D enable implementation of the functions listed below, in relation to the DS communication link.

### Receiving subsystem 2

This receives the signals transmitted by the DSLAM 11 on the group of N lines connected to the distributor D for demodulation and reconstruction of the UIs directed at the CPE devices connected to the distributor D. Reception of the UI directed at a CPE device can take place on any one of the N lines of the group. Therefore, it is assumed that in communications between DSLAM 11 and distributor D there is no physical association between the CPE device(s) and the copper pair line(s) assigned thereto. If the Vectoring/MIMO algorithm is supported, the receiving subsystem 2 is able to coordinate with the DSLAM 11 for the exchange of information necessary for implementation of the related Vectoring/MIMO algorithms. The receiving subsystem 2 can implement flow control functions to regulate transmission of the UIs coming from the DSLAM 11 and do so also taking account of the occupancy status of the line buffers 4 positioned at the input of the transmission subsystem 5 present in the active device 1 at the distributor D.

### Switching subsystem 3

This routes the UI toward the buffer 4 associated with the copper line on which the destination CPE device is connected, after reading of the ID present in the UI.

### Transmission subsystem 5

This transmits the UIs contained inside the line buffers 4 toward the destination device CPE connected on this copper line. If the Vectoring/MIMO algorithm is supported, the transmission subsystem 5 is able to coordinate with the CPE devices for the exchange of information necessary for implementation of the Vectoring/MIMO algorithms on the distributor-CPE device link. The transmission subsystem 5 is able to communicate with the CPE device using the specific DSL technology (i.e., ADSL, VDSL, G.fast or the like) established for this communication.

The subsystems present in the active device 1 at the distributor D enable implementation of the functions listed below, relating to the US communication direction.

### Receiving subsystem 6

This receives the UIs transmitted by the CPE devices connected to the distributor D. The receiving subsystem 6 is able to receive using the specific DSL technology (i.e., ADSL, VDSL, G.fast or the like) established for communication of the CPE device with the DSLAM 11. The receiving subsystem 6 also implements flow control functions that take account of the occupancy status of the line buffers 8 for subsequent transmission of the UIs on the distributor-DSLAM link. If the vectoring/MIMO algorithm is supported, the receiving subsystem 6 is also able to coordinate with the CPE devices for the exchange of information necessary for implementation of the Vectoring/MIMO algorithms on the distributor-CPE device link.

### Switching subsystem 7

This routes the single UI at the output of the receiving subsystem 6 toward one of the line buffers 8 associated with one of the N lines within the group connected to the distributor D. The routing operation takes place on the basis of a scheduling algorithm that operates based on parameters supplied by the control and management subsystem 10 inside the active device 1 at the distributor D.

### Transmission subsystem 9

This transmits UIs inside the line buffer 8 toward the DSLAM 11. If the Vectoring/MIMO algorithm is supported, the transmission subsystem 9 is able to coordinate with the DSLAM 11 for the exchange of information necessary for implementation of the Vectoring/MIMO algorithms on the distributor-DSLAM link and any conversion of the formats of the UIs.

Moreover, the active device 1 at the distributor D contains the subsystem 10 for its management and control. The control and management subsystem 10 communicates with all the subsystems present inside the device 1 to perform the functions indicated below, necessary for implementation of the method and for operation of the system of the invention.

For the DS communication link, the control and management subsystem 10 of the active device 1 at the distributor D:
- controls the switching subsystem 3 of the UI received toward the copper line on which the destination CPE device is connected;
- interrogates CPE devices and communicates the related IDs to the DSLAM 11 in order to associate the group of lines at the distributor with the CPE devices and to identify the DSL technology to be used for communication on the distributor-CPE device link;
- performs measurements on the occupancy status of the line buffer 4 positioned at the input of the transmitter 5 on the distributor-CPE device link in order to control the flow of transmissions from the DSLAM 11 to the distributor D.

For the US communication direction, the control and management subsystem 10 of the active device 1 at the distributor D:
- controls the switching subsystem 7 of the UI coming from the CPE device toward one of the line buffers 8 for subsequent transmission of the UI toward the DSLAM 11;
- sets the scheduling algorithm and the related parameters for managing the transmission lines on the US communication direction between distributor D and DSLAM 11;
- performs measurement of the occupancy status of the line buffer 8 for transmission from the distributor D to the DSLAM 11 necessary both for operation of the scheduling algorithm and for the flow control algorithm for transmissions between distributor D and CPE device.

### Functions of the equipment that implement a variant of embodiment of the invention

The functional architecture of a possible variant of embodiment of the active device 1 at the distributor D is shown in Fig. 3b.

In said variant of embodiment the active device 1 at the distributor D comprises a first device 17 and a second device 25 mutually interconnected but physically separate.

The subsystems present in the first device 17 and in the second device 25, forming the active device 1 at the distributor, allow the functions listed below, in relation to the DS communication link, to be implemented.

### Receiving subsystem 18 of the first device 17

It receives the signals transmitted by the DSLAM 11 on the group of N lines connected to the distributor D for demodulation and reconstruction of the UI directed at the CPE devices connected to the distributor D. Reception of the UI directed to a CPE device can take place on any one of the N lines of the group. Therefore, it is assumed that in communications between DSLAM 11 and distributor D there is no physical association between the CPE device(s) and the copper pair line(s) assigned thereto. If the Vectoring/MIMO algorithm is supported, the receiving subsystem 18 is able to coordinate with the DSLAM 11 for the exchange of information necessary for implementation of the related Vectoring/MIMO algorithms. The receiving subsystem 18 can implement flow control functions to regulate the transmission of UIs coming from the DSLAM 11 and do this also taking into account the occupancy status of the line buffer 19 positioned at the input of the transmission subsystem 26 of the second device 25 present in the active device 1 at the distributor D.

### Multiplexing subsystem 20 of the first device 17

It performs multiplexing of the UIs at the output of the bank of buffers 19 connected to the output of the receiving subsystem 18 and generates the multiplexed signal that is transmitted on the fiber or copper link connected to the input of the second device 25.

### Transmission subsystem 26 of the second device 25

It performs reception of the multiplexed flow of UIs from the first device 17 using the fiber or copper interconnection connect.

It performs all the typical functions of a DSLAM for transmission of the UIs extracted from the multiplexed flow of UIs received from the first device 17 toward the corresponding destination CPE devices.

If the Vectoring/MIMO algorithm is supported, the transmission subsystem 26 is able to coordinate with the CPE devices for the exchange of information necessary for implementation of the related Vectoring/MIMO algorithms on the distributor-CPE device link. The transmission subsystem 26 is able to communicate with the CPE devices using the specific DSL technology (i.e., ADSL, VDSL, G.fast or the like) established for this communication.

The subsystems present in the first device 17 and in the second device 25, forming the active device 1 at the distributor D, allow the functions listed below, in relation to the US communication direction, to be implemented.

### Receiving subsystem 27 of the second device 25

It performs all the typical functions of a DSLAM for the reception of UIs from the CPE devices interconnected thereto.

If the Vectoring/MIMO algorithm is supported, the receiving subsystem 27 is able to coordinate with the CPE devices for the exchange of information necessary for implementation of the Vectoring/MIMO algorithms on the CPE device-second device transmission link and any conversion of the formats of the UIs.

It performs generation and transmission of the multiplexed flow of UIs received from the CPE devices toward the first device 17 using the fiber or copper interconnection connect.

### Demultiplexing subsystem 21 of the first device 17

It performs demultiplexing of the UIs present inside the multiplexed signal generated by the second device 25 and present on the fiber or copper link exiting from the second device 25.

### Transmission subsystem 23 of the first device 17

It performs transmission of the UIs inside the line buffers 22 toward the DSLAM 11. If the Vectoring/MIMO algorithm is supported, the transmission subsystem 23 is able to coordinate with the DSLAM 11 for the exchange of information necessary for implementation of the Vectoring/MIMO algorithms on the distributor-DSLAM transmission link and any conversion of the formats of the UIs.

### Control and management subsystem 24

The first device 17 included in the active device 1 at the distributor D also contains the subsystem 24 for management and control of the first device 17 and of the second device 25.

Said control and management subsystem 24 communicates with all the subsystems present inside the first device 17 and the second device 25 to perform the functions, indicated below, necessary for implementation of the method, and for operation of the system, of the invention.

For the DS communication link, said control and management subsystem 24:
- controls the switching subsystem of the UI received toward the copper line on which the destination CPE device is connected;
- interrogates the CPE devices and communicates to the DSLAM 11 the related IDs in order to associate the group of lines to the distributor D with the CPE devices and identify the DSL technology to be used for communication on the distributor-CPE device link;
- performs the measurements on the occupancy status of the line buffers 19 positioned at the input of the transmitter 25 on the distributor-CPE device link in order to control the flow for transmissions from the DSLAM 11 to the distributor D.

For the US communication direction, said control and management subsystem 24:
- controls the switching subsystem of the UI coming from the CPE device toward one of the line buffers 22 for the subsequent transmission of the UI toward the DSLAM 11;
- sets the scheduling algorithm and the related parameters for managing the transmission lines on the US communication direction between distributor D and DSLAM 11;
- measures the occupancy status of the line buffers 22 for transmission from the distributor D to the DSLAM 11 necessary both for operation of the scheduling algorithm and for the flow control algorithm for transmission between distributor D and CPE device.

### Subsystems and functions of the modified DSLAM 11

To implement the method of the invention it is necessary to use a modified DSLAM 11, provided with additional functions, implemented via hardware/software/firmware and/or with the introduction of the subsystems highlighted in the functional architecture shown in Fig. 4.

The subsystems present in the modified DSLAM 11 allow implementation of the functions listed below, in addition to those already existing.

The control and management subsystem 16 of the DSLAM 11:
- identifies the distributor D and the related copper lines connected thereon;
- interrogates the active devices 1 at the distributors D in order to identify the CPE devices connected to the distributors D;
- controls, manages and activates/deactivates the CPE devices remotely through the active device 1 to the distributor D;
- creates switching tables on groups of lines for communications on the DS and US directions;
- sets the scheduling algorithms and the related parameters within the switching subsystems 12, 14 on groups of lines.

The switching subsystem 12 on groups of lines on the DS direction:
- reads the ID of each UI received on the optical fiber connect coming from the CO;
- identifies the distributor D on which the CPE device is connected and the associated group of copper lines connected to the distributor D, starting from the ID inside the single UI;
- selects, according to a scheduling algorithm, one of the lines of the group for transmission toward the distributor D and then toward the CPE device;
- stores the UI in the line buffer 13 corresponding to the copper line for subsequent transmission toward the distributor D.

The switching subsystem 14 on groups of lines on the US direction:
- reads the ID of each UI received on each of the lines belonging to a group;
- routes the UI toward the output buffer 15 associated with the CPE device for subsequent transmission toward the central office CO on optical fiber connect, starting from the ID.

As a rule, the modified DSLAM 11 and the active device 1 at the distributor D should guarantee equal access to the shared resource by all the active users. For this purpose, the modified DSLAM 11 and the active device 1 at the distributor D can implement suitable resource allocation and traffic management strategies performed through suitable scheduling algorithms. Operation of the method and of the system in the case of several operators is the same but the implementation of some functions, such as scheduling, must take account of the fact that there can also be more than one active device 1 of different operators inside the same distributor D, or more than one separate distributor D each of which interconnected to the DSLAM 11 of an operator through its own sub-set of lines extracted from the group.

## Claims

1. Multi user DSL method for the statistical multiplexing of copper access lines, **characterized in that**, for the downstream DS communication link, it comprises the steps of:
- receiving units of information, UI, directed at transceiver devices (CPE) of end users, on connects coming from a central office (CO), through DSLAM equipment (11);
- identifying groups of transceiver devices (CPE) of end users where each group consists of a set of N copper lines connected to a same distributor (D) of an access network node, starting from identifiers ID of said devices (CPE) and said distributor (D), via said DSLAM equipment (11);
- selecting and transmitting units of information, UI, on any one of the N copper lines belonging to the group, according to scheduling algorithms that take into account of at least the occupancy status of the lines of said group, via said DSLAM equipment (11);
- receiving, demodulating and reconstructing units of information, UI, sent by said DSLAM equipment (11) on the selected line, via an electronic device (1) in said distributor (D) of said access network node;
- on the basis of the identifier ID in the received units of information, UI, sending said units of information, UI, on the selected copper line that uniquely connects said distributor (D) to the destination devices (CPE), via said electronic device (1);
- transmitting the units of information, UI, received to the destination
devices (CPE), using the specific DSL technology provided for said
devices (CPE), via said electronic device (1), and **in that**, for the upstream US communication direction, it comprises the steps of:
- receiving and demodulating units of information, UI, directed by transceiver devices (CPE) of end users to said distributor (D), on copper lines that uniquely connect devices (CPE) to said distributor (D) and using the specific DSL technology provided for said devices (CPE), via said electronic device (1);
- sending the units of information, UI, received to the DSLAM equipment (11), using any one of the N copper lines belonging to the group and attested to the distributor (D), according to a scheduling algorithm that takes into account of at least the occupancy status of line buffers (8) associated with said N lines, via said electronic device (1);
- receiving and demodulating units of information, UI, on any one of the N copper lines of the group, via said DSLAM equipment (11);
- transmitting the units of information, UI, received toward the central office (CO), via said DSLAM equipment (11).

2. A method according to claim 1, **characterized in that** it comprises the preliminary steps of:
- interrogating electronic devices (1) in distributors (D) of access network nodes to associate/verify the status of the copper lines connected thereto and to acquire/update the identity of the devices (CPE) of the end users connected thereto, via said DSLAM equipment (11);
- logically partitioning said copper lines in one or more groups, connected to said distributors (D) and logically shared among all the devices (CPE) of the end users connected thereto.

3. A method according to claim 1 or 2, **characterized in that**, with respect to the DS communication link, said electronic device (1) is able to carry out the following steps:
- receive the signals transmitted by the DSLAM (11) on the group of N lines connected to the distributor (D) for demodulation and reconstruction of the units of information, UI, directed at the devices (CPE) connected to the distributor (D), via the receiving subsystem (2) from the DSLAM (11);
- coordinate with the DSLAM (11) for the exchange of information necessary for any implementation of processing algorithms of Vectoring/MIMO type on the distributor-DSLAM link, via the receiving subsystem (2) from the DSLAM (11);
- regulate the transmission of the units of information, UI, coming from the DSLAM (11) taking account of the occupancy status of the line buffers (4) positioned at the input of the transmission subsystem (5), via the receiving subsystem (2) from the DSLAM (11);
- route the unit of information, UI, toward the buffer (4) associated with the copper line on which the destination device (CPE) is connected, in accordance with the reading of the ID inside the unit of information, UI, via the switching subsystem (3) for the DS direction;
- transmit the units of information, UI, contained in the line buffers (4) toward the destination device (CPE) connected on this copper line, via the transmission subsystem (5) toward the device (CPE);
- coordinate with the devices (CPE) for the exchange of information necessary for any implementation of processing algorithms of Vectoring/MIMO type on the link connecting the distributor and the transceiver device (CPE), via the transmission subsystem (5) toward the devices (CPE).

4. A method according to claim 1 or 2, **characterized in that**, with respect to the DS communication link, said electronic device (1) is able to carry out the following further steps:
- control the switching subsystem (3) of the unit of information, UI, received toward the copper line on which the destination device (CPE) is connected, via the control and management subsystem (10);
- interrogate the devices (CPE) and communicate to the DSLAM (11) the with respect ID to associate the group of lines at the distributor (D) with the devices (CPE) and to identify the DSL technology to be used for communication on the link between the distributor and the transceiver device (CPE), via the control and management subsystem (10);
- perform measurements of the occupancy status of the line buffers (4) positioned at the input of the transmission subsystem (5) on the link connecting the distributor to the transceiver device (CPE) to control the flow of transmissions on the DSLAM-distributor link, via the control and management subsystem (10).

5. A method according to claim 1 or 2, **characterized in that**, with respect to the US communication direction, said electronic device (1) is able to carry out the following steps:
- receive the units of information, UI, transmitted by the devices (CPE) connected to the distributor (D) using the specific DSL technology provided for communication of the device (CPE) with the DSLAM (11), via the receiving subsystem (6) from the devices (CPE);
- coordinate with the devices (CPE) for the exchange of information necessary for any implementation of processing algorithms of Vectoring/MIMO type on the link between the distributor and the transceiver device (CPE), via the receiving subsystem (6) from the devices (CPE);
- regulate the transmissions of the UI coming from the devices (CPE) taking account of the occupancy status of the line buffers (8) positioned at the input of the transmission subsystem (9), via the receiving subsystem (6) from the devices (CPE);
- route the single unit of information, UI, at the output of the receiving subsystem (6) toward one of the line buffers (8) associated with one of the N lines inside the group connected to the distributor (D), according to a scheduling algorithm, via the switching subsystem (7) for the US direction;
- transmitting the units of information, UI, in the line buffers (8) toward the DSLAM (11), via the transmission subsystem (9) toward the DSLAM (11);
- coordinate with the DSLAM (11) for the exchange of information necessary for implementation of Vectoring/MIMO algorithms on the distributor-DSLAM link, via the transmission subsystem (9) to the DSLAM (11).

6. A method according to claim 5, **characterized in that**, with respect to the US communication direction, said electronic device (1) is able to carry out the following further steps:
- control the switching subsystem (7) of the unit of information (UI) coming from the device (CPE) toward one of the line buffers (8) for the subsequent transmission of the unit of information, UI, toward the DSLAM (11), via the control and management subsystem (10);
- set the parameters of a scheduling algorithm for management of the transmission lines on the distributor-DSLAM link, via the control and management subsystem (10);
- perform measurements of the occupancy status of the line buffers (8) for transmission from the distributor (D) to the DSLAM (11) which are necessary to set the scheduling algorithm and to control the flow of transmissions on the distributor transceiver device link (CPE), via the control and management subsystem (10).

7. A method according to claim 1, **characterized in that** it is executed on fixed access networks of FttC, FttDp type and with DSL connect directly from central offices (CO), in combination with processing techniques of Vectoring/MIMO type.

8. Multi user statistical multiplexing system of copper access lines, comprising:
- an electronic device (1), associated with a distributor (D) of an access network node interposed between a central office (CO) and the transceiver devices (CPE) of the end users; DSLAM equipment (11), associated with said access network node, **characterized in that** said electronic device (1) comprises a first device (17) and a second device (25) interconnected to the first, where said first device (17) comprises:
- a receiving subsystem (18) from the DSLAM (11);
- a buffering subsystem (19) of the units of information, UI, for transmission toward the devices (CPE);
- a multiplexing subsystem (20) of the units of information, UI, that generates the single signal transmitted on the fiber or copper link that is connected to the input of the second device (25);
- a demultiplexing subsystem (21) of the units of information, UI, from the signal on the fiber or on copper link output from the second device (25);
- a buffering subsystem (22) for transmission on the groups of lines toward the DSLAM (11);
- a transmission subsystem (23) toward the DSLAM (11);
- a control and management subsystem (24), for setting the parameters in the subsystems and for processing and collecting measurement data, and where said second device (25), able to perform functionalities typical of a DSLAM, comprises:
- a transmission subsystem (26) that receives the multiplexed flow of units of information (UI) from the first device (17) using a fiber or copper interconnection connect and that executes the functionalities of a DSLAM to perform transmission of the units of information, UI, extracted from the multiplexed flow toward the corresponding destination devices (CPE):
- a receiving subsystem (27) that executes transmission of the multiplexed flow of units of information, UI, received from the devices (CPE) toward the first device (17) using a fiber or copper interconnection connect and that performs the functionalities of a DSLAM to receive the units of information, UI, from the devices (CPE) interconnected thereto. where said electronic device (1) and said DSLAM equipment (11) cooperate to determine the sharing of groups of copper access lines on the connect between said DSLAM equipment (11) and said devices (CPE) of the end users, also with the use of extra-pairs in addition to the lines of the group assigned to the devices (CPE), so as to obtain an increase of the transmission capacity of said single end users.

9. A system according to claim 8, **characterized in that**, with respect to the DS communication link, said electronic device (1) is able to perform the following functionalities, through said subsystems:
- receive the signals transmitted by the DSLAM (11) on the group of N lines connected to the distributor (D) for demodulation and reconstruction of the units of information, UI, directed at the devices (CPE) connected to the distributor (D), via the receiving subsystem (18) of the first device (17);
- coordinate with the DSLAM (11) for the exchange of information necessary for any implementation of processing algorithms of Vectoring/MIMO type, via the receiving subsystem (18) of the first device (17);
- regulate transmission of the units of information, UI, coming from the DSLAM (11) also taking account of the occupancy status of the line buffers (19) positioned at the input of the transmission subsystem (26) of the second device (25), via the receiving subsystem (18) of the first device (17);
- perform multiplexing of the units of information, UI, at the output of the line buffers (19) connected to the output of the receiving subsystem (18), via the multiplexing subsystem (20) of the first device (17);
- generate the multiplexed signal that is transmitted on the fiber or copper link interconnected to the input of the second device (25), via the multiplexing subsystem (20) of the first device (17).

10. A system according to claim 8, **characterized in that**, with respect to the DS communication link, said electronic device (1) is able to perform the following functions, through said subsystems:
- receive the multiplexed flow of units of information, UI, from the first device (17) using the fiber or copper interconnection connect, via the transmission subsystem (26) of the second device (25);
- perform the functions of a DSLAM for transmission of the units of information, UI,
extracted from the multiplexed flow of the units of information, UI,
received from the first device (17) toward the corresponding destination devices (CPE), via the transmission subsystem (26) of the second device (25);
- coordinate with the devices (CPE) for the exchange of information which are necessary for implementation of the Vectoring/MIMO algorithms on the link between the distributor and the transceiver device (CPE) using the specific DSL technology provided for this communication, via the transmission subsystem (26) of the second device (25).

11. A system according to claim 8, **characterized in that**, with respect to the US communication direction, said electronic device (1) is able to perform the following functions, through said subsystems:
- perform the functions of a DSLAM for receiving units of information, UI, from the devices (CPE) interconnected thereto, via the receiving subsystem (27) of the second device (25);
- coordinate with the devices (CPE) for the exchange of information necessary for any implementation of the Vectoring/MIMO algorithms on the link between the transceiver device (CPE) and the second device and any conversion of the formats of the units of information, UI, via the receiving subsystem (27) of the second device (25);
- perform multiplexing of the units of information (UI) received from the devices (CPE) to generate the single multiplexed signal transmitted toward the first device (17) using the fiber or copper interconnection connect, via the receiving subsystem (27) of the second device (25).

12. A system according to claim 8, **characterized in that**, with respect to the US communication direction, said electronic device (1) is able to perform the following functions, through said subsystems:
- perform demultiplexing of the units of information, UI, inside the single multiplexed signal generated by the second device (25) on the fiber or copper link at the output of the second device (25), via the demultiplexing subsystem (21) of the first device (17);
- transmit the units of information, UI, inside the line buffers (22) toward the DSLAM (11), via the transmission subsystem (23) of the first device (17);
- coordinate with the DSLAM (11) for the exchange of information necessary for any implementation of processing algorithms of Vectoring/MIMO type on the link between the distributor and the DSLAM and any conversion of the formats of the units of information, UI, via the transmission subsystem (22) of the first device (17).

13. A system according to claim 8, **characterized in that** said DSLAM equipment (11) comprises:
- a subsystem (12) on groups of lines on the DS direction, provided with buffering subsystems (13);
- a subsystem (14) on groups of lines on the US direction, if necessary provided with buffering subsystems (15);
- a control and management subsystem (16), where said subsystems are able to perform the following functionalities:
- identify the distributors (D) and the copper lines connected thereon, via the control and management subsystem (16);
- interrogate the electronic devices (1) associated with the distributors (D) to identify the devices (CPE) connected to these distributors (D), via the control and management subsystem (16);
- control, manage and activate/deactivate the devices (CPE) remotely by means of the electronic devices (1) associated with the distributors (D), via the control and management subsystem (16);
- create switching tables on groups of lines for communications on the DS and US directions, via the control and management subsystem (16);
- set scheduling algorithms and related parameters inside the switching subsystems (12, 14) on the groups of DS and US lines, via the control and management subsystem (16).

14. A system according to claim 13, **characterized in that**, with respect to the DS communication link, said DSLAM equipment (11) is able to perform the following further functions through said subsystems:
- read the ID of each unit of information, UI, received from the central office (CO), via the switching subsystem (12) on groups of lines on the DS direction;
- identify the distributor (D) on which the device (CPE) is connected and the group of copper lines connected to the distributor (D), starting from the ID inside the single unit of information, UI, received, via the switching subsystem (12) on groups of lines on the DS direction;
- select, according to a scheduling algorithm, one of the lines of the group to transmit toward the distributor (D), via the switching subsystem (12) on groups of lines on the DS direction;
- store the unit of information, UI, in the line buffer (13) corresponding to the copper line and subsequently transmit it toward the distributor (D), via the switching subsystem (12) on groups of lines on the DS direction.

15. A system according to claim 13, **characterized in that**, with respect to the US communication direction, said DSLAM equipment (11) is able to perform the following further functions through said subsystems:
- read the ID of each unit of information, UI, received on each of the lines belonging to a group of lines, via the switching subsystem (14) on groups of lines on the US direction;
- route the unit of information, UI, toward the output buffer (15) associated with the device (CPE) and subsequently transmit it toward the central office (CO), starting from the ID of each unit of information, UI, via the switching subsystem (14) on groups of lines on the US direction.

## Patentansprüche

1. Mehrbenutzer-DSL-Verfahren zum statistischen Multiplexen von Kupferleitungen, **dadurch gekennzeichnet, dass** es für die Downstream DS-Kommunikationsverbindung folgende Schritte umfasst:
- Empfangen von Informationseinheiten, die an Transceiver-Geräte (CPE) von Endbenutzern gerichtet sind, auf Verbindungen, die von einer Zentralstelle (CO) über eine DSLAM-Vorrichtung (11) kommen;
- Identifizieren von Gruppen von Transceiver-Geräten (CPE) von Endbenutzern, wobei jede Gruppe aus einem Satz von N Kupferleitungen besteht, die mit demselben Verteiler (D) eines Zugangsnetzknotens verbunden sind, ausgehend von den Identifikatoren ID der besagten Geräte (CPE) und des besagten Verteilers (D) über die besagte DSLAM-Vorrichtung (11);
- Auswählen und Übertragen von Informationseinheiten auf einer beliebigen der N Kupferleitungen, die zur Gruppe gehören, gemäß Planungsalgorithmen, die zumindest den Belegungsstatus der Leitungen der besagten Gruppe berücksichtigen, über die besagte DSLAM-Vorrichtung (11);
- Empfangen, Demodulieren und Rekonstruieren von Informationseinheiten, die von der besagten DSLAM-Vorrichtung (11) auf der ausgewählten Leitung gesendet werden, über ein elektronisches Gerät (1) in dem besagten Verteiler (D) des besagten Zugangsnetzknotens;
- aufgrund des Identifikators ID in den empfangenen Informationseinheiten Senden der besagten Informationseinheiten auf die ausgewählte Kupferleitung, die den besagten Verteiler (D) eindeutig mit den Zielgeräten (CPE) über das besagte elektronische Gerät (1) verbindet;
- Übertragen der empfangenen Informationseinheiten an die Zielgeräte (CPE), unter Verwendung der für die besagten Geräte (CPE) vorgesehenen spezifischen DSL-Technologie, über das besagte elektronische Gerät (1),
und dadurch, dass es für die Upstream US-Kommunikationsverbindung folgende Schritte umfasst:
- Empfangen und Demodulieren von Informationseinheiten, die von Transceiver-Geräten (CPE) von Endbenutzern an den besagten Verteiler (D) gerichtet sind, auf Kupferleitungen, die die Geräte (CPE) eindeutig mit dem besagten Verteiler (D) verbinden, und unter Verwendung der für die besagten Geräte (CPE) vorgesehenen spezifischen DSL-Technologie, über das besagte elektronische Gerät (1);
- Senden der empfangenen Informationseinheiten an die DSLAM-Vorrichtung (11), unter Verwendung einer beliebigen der N Kupferleitungen, die zur Gruppe gehören und dem Verteiler (D) bescheinigt wurden, gemäß einem Planungsalgorithmus, der zumindest den Belegungszustand der Leitungspuffer (8) berücksichtigt, die mit den besagten N Leitungen über das besagte elektronische Gerät (1) verbunden sind;
- Empfangen und Demodulieren von Informationseinheiten auf einer beliebigen der N Kupferleitungen der Gruppe, über die besagte DSLAM-Vorrichtung (11);
- Übertragen der empfangenen Informationseinheiten zur Zentralstelle (CO) über die besagte DSLAM-Vorrichtung (11).

2. Ein Verfahren gemäß Anspruch 1, **dadurch gekennzeichnet, dass** es die folgenden vorbereitenden Schritte umfasst:
- Abfragen der elektronischen Geräte (1) in Verteilern (D) von Zugangsnetzknoten, um den Status der daran angeschlossenen Kupferleitungen zuzuordnen/zu überprüfen und die Identität der Geräte (CPE) der daran angeschlossenen Endbenutzer über die besagte DSLAM-Vorrichtung (11) zu erfassen/zu aktualisieren;
- logisches Aufteilen der besagten Kupferleitungen in eine oder mehrere Gruppen, die mit den besagten Verteilern (D) verbunden sind und logischerweise zwischen allen Geräten (CPE) der daran angeschlossenen Endbenutzer gemeinsam genutzt werden.

3. Ein Verfahren gemäß Anspruch 1 oder 2, **dadurch gekennzeichnet, dass** in Bezug auf die DS-Kommunikationsverbindung das besagte elektronische Gerät (1) in der Lage ist, die folgenden Schritte auszuführen:
- Empfangen der Signale, die vom DSLAM (11) auf die Gruppe der an den Verteiler angeschlossenen N Leitungen übertragen werden zur Demodulation und Rekonstruktion der Informationseinheiten, die an die an den Verteiler (D) angeschlossenen Geräte (CPE) über das Empfangssubsystem vom DSLAM (11) gerichtet sind;
- Koordinieren mit dem DSLAM (11) für den Austausch von Informationen, die für jede Implementierung von Verarbeitungsalgorithmen des Typs Vectoring/MIMO auf der Verteiler-DSLAM-Verbindung über das Empfangssubsystem (2) vom DSLAM (11) erforderlich sind;
- Regulieren der Übertragung der vom DSLAM (11) kommenden Informationseinheiten unter Berücksichtigung des Belegungsstatus der Leitungspuffer (4), die am Eingang des Übertragungssubsystems (5) positioniert sind, über das Empfangssubsystem (2) vom DSLAM (11);
- Weiterleiten der Informationseinheit zum Puffer (4), der mit der Kupferleitung verbunden ist, an die das Zielgerät (CPE) angeschlossen ist, in Übereinstimmung mit dem Lesen der ID innerhalb der Informationseinheit über das Switching Subsystem (3) für die DS-Richtung;
- Übertragen der in den Leitungspuffern (4) enthaltenen Informationseinheiten zum Zielgerät (CPE), das an dieser Kupferleitung angeschlossen ist, über das Übertragungssubsystem (5) zum Gerät (CPE);
- Koordinieren mit den Geräten (CPE) für den Austausch von Informationen, die für jede Implementierung von Verarbeitungsalgorithmen des Typs Vectoring/MIMO auf der Verbindung zwischen dem Verteiler und dem Transceiver-Gerät (CPE) über das Übertragungssubsystem (5) zu den Geräten (CPE) erforderlich sind.

4. Ein Verfahren gemäß Anspruch 1 oder 2, **dadurch gekennzeichnet, dass** in Bezug auf die DS-Kommunikationsverbindung das besagte elektronische Gerät (1) in der Lage ist, die folgenden weiteren Schritte auszuführen:
- Steuerung des Switching Subsystems (3 der empfangenen Informationseinheit zu der Kupferleitung, an die das Zielgerät (CPE) anschlossen ist, über das Steuerungs- und Managementsubsystem (10);
- Abfragung der Geräte (CPE) und Mitteilung an den DSLAM (11) der dazugehörigen IDs, um die Gruppe der Leitungen in den Verteiler (D) mit den Geräten (CPE) zu verbinden und die DSL-Technologie zu identifizieren, die für die Kommunikation auf der Verbindung zwischen dem Verteiler und dem Transceiver-Gerät (CPE), über das Steuerungs- und Managementsubsystem (10) zu verwenden ist;
- Durchführen von Messungen des Belegungsstatus der Leitungspuffer (4), die sich am Eingang des Übertragungssubsystems (5) auf der Verbindung zwischen dem Verteiler und dem Transceiver-Gerät (CPE) befinden, um den Fluss der Übertragungen auf der DSLAM-Verteiler-Verbindung über das Steuerungs- und Managementsubsystem (10) zu steuern.

5. Ein Verfahren gemäß Anspruch 1 oder 2, **dadurch gekennzeichnet, dass** in Bezug auf die US-Kommunikationsrichtung das besagte elektronische Gerät (1) in der Lage ist, die folgenden Schritte auszuführen:
- Empfangen der Informationseinheiten, die von den Geräten (CPE), die an den Verteiler (D) angeschlossen sind, unter Verwendung der spezifischen DSL-Technologie übertragen werden, die für die Kommunikation des Geräts (CPE) mit dem DSLAM (11) über das Empfangssubsystem (6) von den Geräten (CPE) vorgesehen ist;
- Koordinieren mit den Geräten (CPE) für den Austausch von Informationen, die für jede Implementierung von Verarbeitungsalgorithmen des Typs Vectoring/MIMO auf der Verbindung zwischen dem Verteiler und dem Transceiver-Gerät (CPE), über das Empfangsssubsystem (5) von den Geräten (CPE) erforderlich sind;
- Regulieren der Übertragungen der von den Geräten (CPE) kommenden UI unter Berücksichtigung des Belegungsstatus der Leitungspuffer (8), die am Eingang des Übertragungssubsystems (9) positioniert sind, über das Empfangssubsystem (6) von den Geräten (CPE);
- Weiterleiten der einzelnen Informationseinheit am Ausgang des Empfangssubsystem (6) zu einem der Leitungspuffer (8), die mit einer der N Leitungen innerhalb der an den Verteiler (D) angeschlossenen Gruppe verbunden sind, gemäß einem Planungsalgorithmus, über das Switching Subsystem (7) für die US-Richtung;
- Übertragen der Informationseinheiten in den Leitungspuffern (8) zum DSLAM (11) über das Übertragungssubsystem (9) zum DSLAM (11);
- Koordinieren mit dem DSLAM (11) für den Austausch von Informationen, die für die Implementierung von Vectoring/MIMO Algorithmen auf der Verteiler-DSLAM-Verbindung über das Übertragungssubsystem (2) zum DSLAM (11) erforderlich sind.

6. Ein Verfahren gemäß Anspruch 5, **dadurch gekennzeichnet, dass** in Bezug auf die US-Kommunikationsrichtung das besagte elektronische Gerät (1) in der Lage ist, die folgenden weiteren Schritte auszuführen:
- Steuerung des Switching Subsystems (7) der vom Gerät (CPE) kommenden Informationseinheit (UI) zu einem der Leitungspuffer (8) für die anschließende Übertragung der Informationseinheit zum DSLAM (11) über das Steuerungs- und Managementsubsystem (10);
- Einstellen der Parameter eines Planungsalgorithmus für das Management der Übertragungsleitungen auf der Verteiler-DSLAM-Verbindung über das Steuerungs- und Managementsubsystem (10);
- Durchführen von Messungen des Belegungsstatus der Leitungspuffer (8) für die Übertragung vom Verteiler (D) zum DSLAM (11), die erforderlich sind, um den Planungsalgorithmus einzustellen und den Fluss der Übertragungen auf der Verteiler-Transceiver-Geräteverbindung (CPE) zu steuern, über das Steuerungs- und Managementsubsystem (10).

7. Ein Verfahren gemäß Anspruch 1, **dadurch gekennzeichnet, dass** es auf festen Zugangsnetzen vom Typ FttC, FttDp und mit DSL-Verbindung direkt von Zentralstellen (CO) in Kombination mit Verarbeitungstechniken vom Typ Vectoring/MIMO ausgeführt wird.

8. Mehrbenutzer-System zum statistischen Multiplexen von Kupferleitungen, umfassend:
- ein elektronisches Gerät (1), das mit einem Verteiler (D) eines Zugangsnetzknotens verbunden ist, der zwischen einer Zentralstelle (CO) und den Transceiver-Geräten (CPE) der Endbenutzer eingefügt ist; eine DSLAM-Vorrichtung (11), die mit dem besagten Zugangsnetzknoten verbunden ist, **dadurch gekennzeichnet, dass** das besagte elektronische Gerät (1) ein erstes Gerät (17) und ein zweites Gerät (25) umfasst, das mit der ersten verbunden ist, wobei das besagte erste Gerät (17) Folgendes umfasst:
- ein Empfangssubsystem (18) vom DSLAM (11)
- ein Pufferungssubsystem (19) der Übertragung der Informationseinheiten zu den Geräten (CPE);
- ein Multiplexsubsystem (20) der Informationseinheiten, das das einzelne Signal erzeugt, das über die Faser- oder Kupferverbindung übertragen wird, die mit dem Eingang des zweiten Geräts (25) verbunden ist;
- ein Demultiplexsubsystem (21) der Informationseinheiten vom Signal auf der Faser- oder Kupferverbindung, das vom zweiten Gerät (25) ausgegeben wird;
- ein Pufferungssubsystem (22) für die Übertragung auf den Gruppen von Leitungen zum DSLAM (11.);
- ein Übertragungssubsystem (23) zum DSLAM (11);
- ein Steuerungs- und Managementsubsystem (24) zum Einstellen der Parameter in den Subsystemen und zur Verarbeitung und Erfassung von Messdaten,
und wobei das besagte zweite Gerät (25), das in der Lage ist, für einen DSLAM typische Funktionen auszuführen, Folgendes umfasst:
- ein Übertragungssubsystem (26), das den gemultiplexten Fluss der Informationseinheiten (UI) vom ersten Gerät (17) unter Verwendung einer Faser- oder Kupfer-Interconnection-Verbindung empfängt und das die Funktionen eines DSLAM ausführt, um die Übertragung der aus dem gemultiplexten Fluss extrahierten Informationseinheiten zu den entsprechenden Zielgeräten (CPE) durchzuführen:
- ein Empfangssubsystem (27), das die Übertragung des gemultiplexten Stroms von Informationseinheiten, die von den Geräten (CPE) empfangen werden, zum ersten Gerät (17) unter Verwendung einer Faser- oder Kupfer-Interconnection-Verbindung ausführt und das die Funktionen eines DSLAM verrichtet, um die Informationseinheiten von den damit verbundenen Geräten (CPE) zu empfangen,
wobei das besagte elektronische Gerät (1) und die besagte DSLAM-Vorrichtung (11) zusammenarbeiten, um die gemeinsame Nutzung von Gruppen von Kupferleitungen auf der Verbindung zwischen der besagten DSLAM-Vorrichtung (11) und den besagten Geräten (CPE) der Endbenutzer zu bestimmen, auch unter Verwendung von zusätzlichen Paaren zusätzlich zu den Leitungen der den Geräten (CPE) zugewiesenen Gruppe, um eine Erhöhung der Übertragungskapazität der besagten einzelnen Endbenutzer zu erhalten.

9. Ein System gemäß Anspruch 8, **dadurch gekennzeichnet, dass** in Bezug auf die DS-Kommunikationsverbindung das besagte elektronische Gerät (1) in der Lage ist, über die besagten Subsysteme die folgenden Funktionen auszuführen:
- Empfangen der Signale, die vom DSLAM (11) auf die mit dem Verteiler (D) verbundene Gruppe von N Leitungen zur Demodulation und Rekonstruktion der Informationseinheiten übertragen werden, die an die mit dem Verteiler (D) verbundenen Geräte (CPE) über das Empfangssubsystem (18) des ersten Geräts (17) gerichtet sind;
- Koordinieren mit dem DSLAM (11) für den Austausch von Informationen, die für jede Implementierung von Verarbeitungsalgorithmen des Typs Vectoring/MIMO über das Empfangssubsystem (18) des ersten Geräts (17) erforderlich sind;
- Regulieren der Übertragung der vom DSLAM (11) kommenden Informationseinheiten auch unter Berücksichtigung des Belegungsstatus der Leitungspuffer (19), die am Eingang des Übertragungssubsystems (26) des zweiten Geräts (25) positioniert sind, über das Empfangssubsystem (18) des ersten Geräts (17);
- Multiplexen der Informationseinheiten am Ausgang der Leitungspuffer (19), die mit dem Ausgang des Empfangssubsystems (18) verbunden sind, über das Multiplexsubsystem (20) des ersten Geräts (17);
- Erzeugen des gemultiplexten Signals, das auf der Faser- oder Kupferverbindung, die mit dem Eingang des zweiten Geräts (25) verbunden ist, über das Multiplexsubsystem (20) des ersten Geräts (17) übertragen wird.

10. Ein System gemäß Anspruch 8, **dadurch gekennzeichnet, dass** in Bezug auf die DS-Kommunikationsverbindung das besagte elektronische Gerät (1) in der Lage ist, über die besagten Subsysteme die folgenden Funktionen auszuführen:
- Empfangen des gemultiplexten Stroms von Informationseinheiten vom ersten Gerät (17) unter Verwendung der Faser- oder Kupfer-Interconnection-Verbindung über das Übertragungssubsystem (26) des zweiten Geräts (25);
- Ausführen der Funktionen eines DSLAM für die Übertragung der Informationseinheiten, die aus dem gemultiplexten Fluss der vom ersten Gerät (17) empfangenen Informationseinheiten extrahiert werden, zu den entsprechenden Zielgeräten (CPE) über das Übertragungssubsystem (26) des zweiten Geräts (25);
- Koordinieren mit den Geräten (CPE) für den Austausch von Informationen, die für die Implementierung der Vectoring/MIMO-Algorithmen auf der Verbindung zwischen dem Verteiler und dem Transceiver-Gerät (CPE) erforderlich sind, unter Verwendung der für diese Kommunikation vorgesehenen spezifischen DSL-Technologie über das Übertragungssubsystem (26) des zweiten Geräts (25).

11. Ein System gemäß Anspruch 8, **dadurch gekennzeichnet, dass** in Bezug auf die US-Kommunikationsrichtung das besagte elektronische Gerät (1) in der Lage ist, über die besagten Subsysteme die folgenden Funktionen auszuführen:
- Ausführen der Funktionen eines DSLAM für den Empfang von Informationseinheiten von den daran angeschlossenen Geräten (CPE) über das Empfangssubsystem (27) des zweiten Geräts (25);
- Koordinieren mit den Geräten (CPE) für den Austausch von Informationen, die für jede Implementierung der Vectoring/MIMO-Algorithmen auf der Verbindung zwischen dem Transceiver-Gerät (CPE) und dem zweiten Gerät sowie für jede Umwandlung der Formate der Informationseinheiten über das Empfangssubsystem (27) des zweiten Geräts (25) erforderlich sind;
- Multiplexen der von den Geräten (CPE) empfangenen Informationseinheiten (UI), um das einzelne gemultiplexte Signal zu erzeugen, das zum ersten Gerät (17) unter Verwendung der Faser- oder Kupfer-Interconnection-Verbindung über das Empfangssubsystem (27) des zweiten Geräts (25) übertragen wird.

12. Ein System gemäß Anspruch 8, **dadurch gekennzeichnet, dass** in Bezug auf die US-Kommunikationsrichtung das besagte elektronische Gerät (1) in der Lage ist, über die besagten Subsysteme die folgenden Funktionen auszuführen:
- Demultiplexen der Informationseinheiten innerhalb des einzelnen gemultiplexten Signals, das vom zweiten Gerät (25) auf der Faser- oder Kupferverbindung am Ausgang des zweiten Geräts (25) über das Demultiplex-Subsystem (21) des ersten Geräts (17) erzeugt wird;
- Übertragen der Informationseinheiten in den Leitungspuffern (22) zum DSLAM (11) über das Übertragungssubsystem (23) des ersten Geräts (17);
- Koordinieren mit dem DSLAM (11) für den Austausch von Informationen, die für jede Implementierung von Verarbeitungsalgorithmen des Typs Vectoring/MIMO auf der Verbindung zwischen dem Verteiler und dem DSLAM sowie für jede Umwandlung der Formate der Informationseinheiten über das Übertragungssubsystem (22) des ersten Geräts (17) erforderlich sind.

13. Ein System gemäß Anspruch 8, **dadurch gekennzeichnet, dass** die besagte DSLAM-Vorrichtung (11) Folgendes umfasst:
- ein Subsystem (12) auf Gruppen von Leitungen in DS-Richtung, das mit Pufferungssubsystemen (13) ausgestattet ist;
- ein Subsystem (14) auf Gruppen von Leitungen in US-Richtung, das, wenn erforderlich, mit Pufferungssubsystemen (15) ausgestattet ist;
- ein Steuerungs- und Managementsubsystem (16)
wobei die besagten Subsysteme in der Lage sind, folgende Funktionen auszuführen:
- Identifizierung der Verteiler (D) und der daran angeschlossenen Kupferleitungen über das Steuerungs- und Managementsubsystem (16);
- Abfragung der elektronischen Geräte (1), die den Verteilern (D) zugeordnet sind, um die an diese Verteiler (D) angeschlossenen Geräte (CPE) über das Steuerungs- und Managementsubsystem (16) zu identifizieren;
- Steuerung, Management und Aktivierung/Deaktivierung der Geräte (CPE) aus der Ferne mittels der elektronischen Geräte (1), die mit den Verteilern (D) verbunden sind, über das Steuerungs- und Managementsubsystem (16);
- Erstellen von Switching-Tabellen auf Gruppen von Leitungen zur Kommunikation in DS- und US-Richtung über das Steuerungs- und Managementsubsystem (16);
- Einstellen von Planungsalgorithmen und zugehörigen Parametern innerhalb der Switching Subsysteme (12, 14) auf den Gruppen von DS- und US-Leitungen über das Steuerungs- und Managementsubsystem (16).

14. Ein System gemäß Anspruch 13, **dadurch gekennzeichnet, dass** in Bezug auf die DS-Kommunikationsverbindung die besagte DSLAM-Vorrichtung (11) in der Lage ist, die folgenden weiteren Funktionen über die besagten Subsysteme auszuführen:
- Lesen der ID jeder der Informationseinheit, die von der Zentralstelle (CO) über das Switching Subsystem (12) auf Gruppen von Leitungen in DS-Richtung empfangen wird;
- Identifizierung des Verteilers (D), an den das Gerät (CPE) angeschlossen ist, und der Gruppe von Kupferleitungen, die an den Verteiler (D) angeschlossen sind, ausgehend von der ID in der einzigen empfangenen Informationseinheit, über das Switching Subsystem (12) auf Gruppen von Leitungen in DS-Richtung;
- Auswahl gemäß einem Planungsalgorithmus einer der Leitungen der Gruppe für die Übertragung zum Verteiler (D) über das Switching Subsystem (12) auf Gruppen von Leitungen in DS-Richtung;
- Speicherung der Informationseinheit im Puffer der Leitung (13), die der Kupferleitung entspricht und anschließend Übertragung zum Verteiler (D) über das Switching Subsystem (12) auf Gruppen von Leitungen in DS-Richtung.

15. Ein System gemäß Anspruch 13, **dadurch gekennzeichnet, dass** in Bezug auf die US-Kommunikationsrichtung die besagte DSLAM-Vorrichtung (11) in der Lage ist, die folgenden weiteren Funktionen über die besagten Subsysteme auszuführen:
- Lesen der ID jeder Informationseinheit, die auf jeder der Leitungen, die zu einer Gruppe von Leitungen gehören, empfangen wird, über das Switching Subsystem (14) auf Gruppen von Leitungen in US-Richtung;
- Weiterleiten der Informationseinheit zum Ausgangspuffer (15), der mit dem Gerät (CPE) verbunden ist, und anschließend Übertragung zur Zentralstelle (CO), ausgehend von der ID jeder Informationseinheit über das Switching Subsystem (14) auf Gruppen von Leitungen in der US-Richtung.

## Revendications

1. Procédé DSL à utilisateurs multiples destiné au multiplexage statistique de lignes d'accès en cuivre, **caractérisé par le fait que**, pour la liaison de communication descendante DS, il comprend les étapes consistant à :
- recevoir des unités d'information, UI, dirigées vers des dispositifs émetteurs-récepteurs (CPE) d'utilisateurs finaux, sur des connexions provenant d'un bureau central (CO), par l'intermédiaire d'un équipement DSLAM (11) ;
- identifier des groupes de dispositifs émetteurs-récepteurs (CPE) d'utilisateurs finaux où chaque groupe consiste en un ensemble de N lignes de cuivre connectées à un même distributeur (D) d'un nœud de réseau d'accès, à partir des identifiants ID desdits dispositifs (CPE) et dudit distributeur (D), via ledit équipement DSLAM (11) ;
- sélectionner et transmettre des unités d'information, UI, sur l'une quelconque des N lignes de cuivre appartenant au groupe, selon des algorithmes de planification qui prennent en compte au moins l'état d'occupation des lignes dudit groupe, via ledit équipement DSLAM (11) ;
- recevoir, démoduler et reconstruire des unités d'information, UI, envoyées par ledit équipement DSLAM (11) sur la ligne sélectionnée, via un dispositif électronique (1) dans ledit distributeur (D) dudit nœud de réseau d'accès ;
- sur la base de l'identifiant ID dans les unités d'informations reçues, UI, envoyer lesdites unités d'informations, UI, sur la ligne de cuivre sélectionnée qui connecte uniquement ledit distributeur (D) aux dispositifs de destination (CPE), via ledit dispositif électronique (1) ;
- transmettre les unités d'informations, UI, reçues aux dispositifs de destination (CPE), en utilisant la technologie DSL spécifique fournie pour lesdits dispositifs (CPE), via ledit dispositif électronique (1),
et **par le fait que**, pour la direction de communication ascendante US, il comprend les étapes consistant à :
- recevoir et démoduler des unités d'information, UI, dirigées par des dispositifs émetteurs-récepteurs (CPE) d'utilisateurs finaux vers ledit distributeur (D), sur des lignes de cuivre qui connectent uniquement des dispositifs (CPE) audit distributeur (D) et en utilisant la technologie DSL spécifique fournie pour lesdits dispositifs (CPE), via ledit dispositif électronique (1) ;
- envoyer les unités d'information, UI, reçues à l'équipement DSLAM (11), en utilisant l'une quelconque des N lignes de cuivre appartenant au groupe et attestées au distributeur (D), selon un algorithme de planification qui prend en compte au moins l'état d'occupation des tampons de ligne (8) associés auxdites N lignes, via ledit dispositif électronique (1) ;
- recevoir et démoduler des unités d'information, UI, sur l'une quelconque des N lignes de cuivre du groupe, via ledit équipement DSLAM (11) ;
- transmettre les unités d'information, UI, reçues vers le bureau central (CO), via ledit équipement DSLAM (11).

2. Procédé selon la revendication 1, **caractérisé par le fait qu'**il comprend les étapes préliminaires suivantes :
- interroger des dispositifs électroniques (1) dans des distributeurs (D) de nœuds de réseau d'accès pour associer/vérifier l'état des lignes de cuivre qui y sont connectées et pour acquérir/mettre à jour l'identité des dispositifs (CPE) des utilisateurs finaux qui y sont connectés, via ledit équipement DSLAM (11) ;
- partitionner logiquement lesdites lignes de cuivre en un ou plusieurs groupes, connectés auxdits distributeurs (D) et logiquement partagés entre tous les dispositifs (CPE) des utilisateurs finaux qui y sont connectés.

3. Procédé selon la revendication 1 ou 2, **caractérisé par le fait que**, vis-à-vis de la liaison de communication DS, ledit dispositif électronique (1) est capable d'exécuter les étapes suivantes :
- recevoir les signaux transmis par le DSLAM (11) sur le groupe de N lignes connectées au distributeur (D) pour la démodulation et la reconstruction des unités d'information, UI, dirigées vers les dispositifs (CPE) connectés au distributeur (D), via le sous-système de réception (2) du DSLAM (11) ;
- coordonner avec le DSLAM (11) l'échange d'informations nécessaires à toute mise en œuvre d'algorithmes de traitement de type vectorisation/MIMO sur la liaison distributeur-DSLAM, via le sous-système de réception (2) du DSLAM (11) ;
- réguler la transmission des unités d'information, UI, en provenance du DSLAM (11) en tenant compte de l'état d'occupation des tampons de ligne (4) positionnés à l'entrée du sous-système de transmission (5), via le sous-système de réception (2) en provenance du DSLAM (11) ;
- acheminer l'unité d'information, UI, vers le tampon (4) associé à la ligne en cuivre sur laquelle le dispositif de destination (CPE) est connecté, conformément à la lecture de l'ID à l'intérieur de l'unité d'information, UI, via le sous-système de commutation (3) pour la direction DS ;
- transmettre les unités d'information, UI, contenues dans les tampons de ligne (4) vers le dispositif de destination (CPE) connecté sur cette ligne de cuivre, via le sous-système de transmission (5) vers le dispositif (CPE) ;
- se coordonner avec les dispositifs (CPE) pour l'échange d'informations nécessaires à toute mise en œuvre d'algorithmes de traitement de type vectorisation/MIMO sur la liaison reliant le distributeur et le dispositif émetteur-récepteur (CPE), via le sous-système de transmission (5) vers les dispositifs (CPE).

4. Procédé selon la revendication 1 ou 2, **caractérisé par le fait que**, vis-à-vis de la liaison de communication DS, ledit dispositif électronique (1) est capable d'exécuter les étapes supplémentaires suivantes :
- commander le sous-système de commutation (3) de l'unité d'information, UI, reçue vers la ligne de cuivre sur laquelle le dispositif de destination (CPE) est connecté, via le sous-système de contrôle et de gestion (10) ;
- interroger les dispositifs (CPE) et communiquer au DSLAM (11) l'ID correspondante pour associer le groupe de lignes au niveau du distributeur (D) aux dispositifs (CPE) et pour identifier la technologie DSL à utiliser pour la communication sur la liaison entre le distributeur et le dispositif émetteur-récepteur (CPE), via le sous-système de contrôle et de gestion (10) ;
- effectuer des mesures de l'état d'occupation des tampons de ligne (4) positionnés à l'entrée du sous-système de transmission (5) sur la liaison reliant le distributeur au dispositif émetteur-récepteur (CPE) pour contrôler le flux de transmissions sur la liaison DSLAM-distributeur, via le sous-système de contrôle et de gestion (10).

5. Procédé selon la revendication 1 ou 2, **caractérisé par le fait que**, vis-à-vis de la direction de communication US, ledit dispositif électronique (1) est capable d'exécuter les étapes suivantes :
- recevoir les unités d'information, UI, transmises par les dispositifs (CPE) connectés au distributeur (D) en utilisant la technologie DSL spécifique prévue pour la communication du dispositif (CPE) avec le DSLAM (11), via le sous-système de réception (6) des dispositifs (CPE) ;
- coordonner avec les dispositifs (CPE) l'échange d'informations nécessaires à toute mise en œuvre d'algorithmes de traitement de type vectorisation/MIMO sur la liaison entre le distributeur et le dispositif émetteur-récepteur (CPE), via le sous-système de réception (6) des dispositifs (CPE) ;
- réguler les transmissions de l'UI provenant des dispositifs (CPE) en tenant compte de l'état d'occupation des tampons de ligne (8) positionnés à l'entrée du sous-système de transmission (9), via le sous-système de réception (6) des dispositifs (CPE) ;
- acheminer l'unité d'information, UI, individuelle à la sortie du sous-système de réception (6) vers l'un des tampons de ligne (8) associés à l'une des N lignes à l'intérieur du groupe connecté au distributeur (D), selon un algorithme de planification, via le sous-système de commutation (7) pour la direction US ;
- transmettre les unités d'information, UI, dans les tampons de ligne (8) vers le DSLAM (11), via le sous-système de transmission (9) vers le DSLAM (11) ;
- coordonner avec le DSLAM (11) l'échange d'informations nécessaires à la mise en œuvre des algorithmes de vectorisation/MIMO sur la liaison distributeur-DSLAM, via le sous-système de transmission (9) vers le DSLAM (11).

6. Procédé selon la revendication 5, **caractérisé par le fait que**, vis-à-vis de la direction de communication US, ledit dispositif électronique (1) est capable d'exécuter les étapes supplémentaires suivantes :
- commander le sous-système de commutation (7) de l'unité d'information, UI, provenant du dispositif (CPE) vers l'un des tampons de ligne (8) pour la transmission ultérieure de l'unité d'information, UI, vers le DSLAM (11), via le sous-système de commande et de gestion (10) ;
- définir les paramètres d'un algorithme de planification pour la gestion des lignes de transmission sur la liaison distributeur-DSLAM, via le sous-système de commande et de gestion (10) ;
- effectuer des mesures de l'état d'occupation des tampons de ligne (8) pour la transmission du distributeur (D) au DSLAM (11) qui sont nécessaires pour définir l'algorithme de planification et pour contrôler le flux de transmissions sur la liaison du dispositif émetteur-récepteur du distributeur (CPE), via le sous-système de contrôle et de gestion (10).

7. Procédé selon la revendication 1, **caractérisé par le fait qu'**il est exécuté sur des réseaux d'accès fixes de type FttC, FttDp et avec une connexion DSL directement à partir de centraux (CO), en combinaison avec des techniques de traitement de type vectorisation/MIMO.

8. Système de multiplexage statistique à utilisateurs multiples de lignes d'accès en cuivre, comprenant :
- un dispositif électronique (1), associé à un distributeur (D) d'un nœud de réseau d'accès interposé entre un bureau central (CO) et les dispositifs émetteurs-récepteurs (CPE) des utilisateurs finaux ;
Équipement DSLAM (11), associé audit nœud de réseau d'accès, **caractérisé en ce que** ledit dispositif électronique (1) comprend un premier dispositif (17) et un second dispositif (25) interconnecté au premier, où ledit premier dispositif (17) comprend :
- un sous-système de réception (18) provenant du DSLAM (11) ;
- un sous-système de mise en mémoire tampon (19) des unités d'information, UI, pour la transmission vers les dispositifs (CPE);
- un sous-système de multiplexage (20) des unités d'information, UI, qui génère le signal individuel transmis sur la liaison en fibre ou en cuivre qui est connectée à l'entrée du second dispositif (25) ;
- un sous-système de démultiplexage (21) des unités d'information, UI, à partir du signal sur la fibre ou sur la liaison en cuivre sortant du second dispositif (25) ;
- un sous-système de mise en mémoire tampon (22) pour la transmission sur les groupes de lignes vers le DSLAM (11) ;
- un sous-système de transmission (23) vers le DSLAM (11) ;
- un sous-système de contrôle et de gestion (24), pour régler les paramètres dans les sous-systèmes et pour traiter et collecter les données de mesure,
et où ledit second dispositif (25), capable d'exécuter des fonctionnalités typiques d'un DSLAM, comprend :
- un sous-système de transmission (26) qui reçoit le flux multiplexé d'unités d'information (UI) du premier dispositif (17) en utilisant une connexion d'interconnexion en fibre ou en cuivre et qui exécute les fonctionnalités d'un DSLAM pour effectuer la transmission des unités d'information, UI, extraites du flux multiplexé vers les dispositifs de destination correspondants (CPE) ;
- un sous-système de réception (27) qui exécute la transmission du flux multiplexé d'unités d'information, UI, reçues des dispositifs (CPE) vers le premier dispositif (17) en utilisant une connexion d'interconnexion en fibre ou en cuivre et qui exécute les fonctionnalités d'un DSLAM pour recevoir les unités d'information, UI, des dispositifs (CPE) interconnectés à celui-ci.
où ledit dispositif électronique (1) et ledit équipement DSLAM (11) coopèrent pour déterminer le partage de groupes de lignes d'accès en cuivre sur la connexion entre ledit équipement DSLAM (11) et lesdits dispositifs (CPE) des utilisateurs finaux, également avec l'utilisation de paires supplémentaires en plus des lignes du groupe attribué aux dispositifs (CPE), de manière à obtenir une augmentation de la capacité de transmission desdits utilisateurs finaux individuels.

9. Système selon la revendication 8, **caractérisé par le fait que**, vis-à-vis de la liaison de communication DS, ledit dispositif électronique (1) est capable d'exécuter les fonctionnalités suivantes, par l'intermédiaire desdits sous-systèmes :
- recevoir les signaux transmis par le DSLAM (11) sur le groupe de N lignes connectées au distributeur (D) pour la démodulation et la reconstruction des unités d'information, UI, dirigées vers les dispositifs (CPE) connectés au distributeur (D), via le sous-système de réception (18) du premier dispositif (17) ;
- coordonner avec le DSLAM (11) l'échange d'informations nécessaires à toute mise en œuvre d'algorithmes de traitement de type vectorisation/MIMO, via le sous-système de réception (18) du premier dispositif (17) ;
- réguler la transmission des unités d'information, UI, provenant du DSLAM (11) en tenant compte également de l'état d'occupation des tampons de ligne (19) positionnés à l'entrée du sous-système de transmission (26) du second dispositif (25), via le sous-système de réception (18) du premier dispositif (17) ;
- effectuer le multiplexage des unités d'information, UI, à la sortie des tampons de ligne (19) connectés à la sortie du sous-système de réception (18), via le sous-système de multiplexage (20) du premier dispositif (17) ;
- générer le signal multiplexé qui est transmis sur la liaison en fibre ou en cuivre interconnectée à l'entrée du second dispositif (25), via le sous-système de multiplexage (20) du premier dispositif (17).

10. Système selon la revendication 8, **caractérisé par le fait que**, vis-à-vis de la liaison de communication DS, ledit dispositif électronique (1) est capable d'exécuter les fonctions suivantes, par l'intermédiaire desdits sous-systèmes :
- recevoir le flux multiplexé d'unités d'information, UI, provenant du premier dispositif (17) en utilisant la connexion d'interconnexion en fibre ou en cuivre, via le sous-système de transmission (26) du second dispositif (25) ;
- exécuter les fonctions d'un DSLAM pour la transmission des unités d'information, UI, extraites du flux multiplexé des unités d'information, UI, reçues du premier dispositif (17) vers les dispositifs de destination correspondants (CPE), via le sous-système de transmission (26) du second dispositif (25) ;
- coordonner avec les dispositifs (CPE) l'échange d'informations nécessaires à la mise en œuvre des algorithmes de vectorisation/MIMO sur la liaison entre le distributeur et le dispositif émetteur-récepteur (CPE) en utilisant la technologie DSL spécifique prévue pour cette communication, via le sous-système de transmission (26) du second dispositif (25).

11. Système selon la revendication 8, **caractérisé par le fait que**, vis-à-vis de la direction de communication US, ledit dispositif électronique (1) est capable d'exécuter les fonctions suivantes, par l'intermédiaire desdits sous-systèmes :
- exécuter les fonctions d'un DSLAM pour recevoir des unités d'information, UI, à partir des dispositifs (CPE) interconnectés à celui-ci, via le sous-système de réception (27) du second dispositif (25) ;
- coordonner avec les dispositifs (CPE) l'échange d'informations nécessaires pour toute mise en œuvre des algorithmes de vectorisation/MIMO sur la liaison entre le dispositif émetteur-récepteur (CPE) et le second dispositif et toute conversion des formats des unités d'information, UI, via le sous-système de réception (27) du second dispositif (25) ;
- effectuer le multiplexage des unités d'information, UI, reçues des dispositifs (CPE) pour générer le signal multiplexé individuel transmis vers le premier dispositif (17) en utilisant la connexion d'interconnexion en fibre ou en cuivre, via le sous-système de réception (27) du second dispositif (25).

12. Système selon la revendication 8, **caractérisé par le fait que**, vis-à-vis de la direction de communication US, ledit dispositif électronique (1) est capable d'exécuter les fonctions suivantes, par l'intermédiaire desdits sous-systèmes :
- effectuer le démultiplexage des unités d'information, UI, à l'intérieur du signal multiplexé individuel généré par le second dispositif (25) sur la liaison en fibre ou en cuivre à la sortie du second dispositif (25), via le sous-système de démultiplexage (21) du premier dispositif (17) ;
- transmettre les unités d'information, UI, à l'intérieur des tampons de ligne (22) vers le DSLAM (11), via le sous-système de transmission (23) du premier dispositif (17) ;
- se coordonner avec le DSLAM (11) pour l'échange d'informations nécessaires à toute mise en œuvre d'algorithmes de traitement de type vectorisation/MIMO sur la liaison entre le distributeur et le DSLAM et toute conversion des formats des unités d'information, UI, via le sous-système de transmission (22) du premier dispositif (17).

13. Système selon la revendication 8, **caractérisé par le fait que** ledit équipement DSLAM (11) comprend :
- un sous-système (12) sur des groupes de lignes dans la direction DS, pourvu de sous-systèmes de mise en mémoire tampon (13) ;
- un sous-système (14) sur des groupes de lignes dans la direction US, si nécessaire pourvu de sous-systèmes de mise en mémoire tampon (15) ;
- un sous-système de contrôle et de gestion (16),
où lesdits sous-systèmes sont en mesure de réaliser les fonctionnalités suivantes :
- identifier les distributeurs (D) et les lignes de cuivre qui y sont connectées, via le sous-système de contrôle et de gestion (16) ;
- interroger les dispositifs électroniques (1) associés aux distributeurs (D) pour identifier les dispositifs (CPE) connectés à ces distributeurs (D), via le sous-système de contrôle et de gestion (16) ;
- commander, gérer et activer/désactiver les dispositifs (CPE) à distance au moyen des dispositifs électroniques (1) associés aux distributeurs (D), via le sous-système de contrôle et de gestion (16) ;
- créer des tables de commutation sur des groupes de lignes pour les communications dans les directions DS et US, via le sous-système de contrôle et de gestion (16) ;
- définir des algorithmes de programmation et des paramètres associés à l'intérieur des sous-systèmes de commutation (12, 14) sur les groupes de lignes DS et US, via le sous-système de contrôle et de gestion (16).

14. Système selon la revendication 13, **caractérisé par le fait que**, vis-à-vis de la liaison de communication DS, ledit équipement DSLAM (11) est capable d'exécuter les fonctions supplémentaires suivantes par l'intermédiaire desdits sous-systèmes :
- lire l'ID de chaque unité d'information, UI, reçue du bureau central (CO), via le sous-système de commutation (12) sur des groupes de lignes dans la direction DS ;
- identifier le distributeur (D) sur lequel le dispositif (CPE) est connecté et le groupe de lignes de cuivre connectées au distributeur (D), en partant de l'ID à l'intérieur de l'unité d'information individuelle, UI, reçue, via le sous-système de commutation (12) sur des groupes de lignes dans la direction DS ;
- sélectionner, selon un algorithme de planification, une des lignes du groupe à transmettre vers le distributeur (D), via le sous-système de commutation (12) sur des groupes de lignes dans la direction DS ;
- stocker l'unité d'information, UI, dans le tampon de ligne (13) correspondant à la ligne de cuivre et la transmettre ensuite vers le distributeur (D), via le sous-système de commutation (12) sur des groupes de lignes dans la direction DS.

15. Système selon la revendication 13, **caractérisé par le fait que**, vis-à-vis de la direction de communication US, ledit équipement DSLAM (11) est capable d'exécuter les fonctions supplémentaires suivantes par l'intermédiaire desdits sous-systèmes :
- lire l'ID de chaque unité d'information, UI, reçue sur chacune des lignes appartenant à un groupe de lignes, via le sous-système de commutation (14) sur des groupes de lignes dans la direction US ;
- acheminer l'unité d'information, UI, vers le tampon de sortie (15) associé au dispositif (CPE) et ensuite la transmettre vers le bureau central (CO), en partant de l'ID de chaque unité d'information, UI, via le sous-système de commutation (14) sur des groupes de lignes dans la direction US.
